# FASCICULE DE BREVET EUROPEEN

(11) **EP 0 414 597 B1**
(45) Date de publication et mention de la délivrance du brevet: **24.11.1993**
(21) Numéro de dépôt: 90402308.2
(22) Date de dépôt: 17.08.1990
(51) Int. Cl.: H04N 5/44

(54) **Procédé d'insertion d'une information vidéo supplémentaire à l'extérieur d'une image principale au format 4/3 sur un tube au format 16/9**
Verfahren zur Einblendung einer zusätzlichen Videoinformation ausserhalb eines 4/3-Formathauptbildes in eine 16/9-Formatröhre
Process for inserting supplementary video information external to a main 4/3-format image in a 16/9-format tube

(30) Priorité: 23.08.1989 FR 8911166
(43) Date de publication de la demande: 27.02.1991
(73) Titulaire: LABORATOIRE EUROPEEN DE RECHERCHES ELECTRONIQUES AVANCEES, 92400 Courbevoie (FR)
(72) Inventeur: Poivet, Michel, F-92045 Paris la Défense (FR); Perdrieau, Laurent, F-92045 Paris la Défense (FR)
(74) Mandataire: Ruellan-Lemonnier, Brigitte

(56) Documents cités:
- EP-A- 0 213 912
- EP-A- 0 326 339
- WO-A-86/05644

## Description

La présente invention concerne un procédé d'insertion d'une information vidéo supplémentaire à l'extérieur d'une image principale au format 4/3 sur un tube de télévision au format 16/9.

Depuis peu, il existe sur le marché des tubes-images au format 16/9. Ces tubes ont été développés en vue des applications haute-définition. On peut donc envisager dès aujourd'hui d'équiper les téléviseurs avec ce type de tube, en particulier les téléviseurs dont l'architecture a été réalisée pour être compatible avec les futurs standards. Toutefois, l'ensemble des programmes actuellement diffusés le sont au format 4/3. Il est donc nécessaire, pour pouvoir afficher une image vidéo au format 4/3 sur un tube 16/9, de traiter cette image afin d'éliminer les problèmes de distorsion ou anamorphose lors de l'affichage. Différents traitements peuvent être envisagés. Ainsi, dans le cas d'une image de type "cinémascope", on peut envisager d'agrandir l'image verticalement de manière à réduire les bandes noires. D'autre part, si on affiche l'image en respectant le format initial, on laisse libre une partie de l'écran.

La présente invention a donc pour but de proposer un nouveau procédé d'insertion d'une information vidéo supplémentaire qui utilise la partie laissée libre sur l'écran lors de l'affichage d'une image vidéo principale au format 4/3.

En conséquence, la présente invention a pour objet un procédé d'insertion d'une information vidéo supplémentaire à l'extérieur d'une image principale au format 4/3 sur un tube au format 16/9, caractérisé en ce qu'il consiste, avant de traiter pour affichage l'image principale, à insérer l'information supplémentaire dans le retour ligne de l'image principale.

Selon un mode de réalisation particulier, le procédé comporte les étapes suivantes :
- traitement de l'information vidéo supplémentaire pour obtenir, au moment du retour ligne de l'image principale, un signal vidéo au format souhaité ;
- multiplexage des composantes du signal vidéo principal avec les composantes du signal vidéo supplémentaire, et
- traitement séparé des composantes du signal multiplexé pour obtenir les composantes d'un signal d'affichage pour un affichage sur un tube au format 16/9.

Dans la présente invention, par information vidéo supplémentaire, on entend soit une image au format réduit du type de celle obtenue dans les procédés d'incrustation connus soit une information spécifique telle qu'une information sur le fonctionnement du téléviseur. Dans le cas d'une image réduite, l'information vidéo supplémentaire est obtenue en utilisant un circuit de traitement de type classique et l'ensemble information vidéo supplémentaire et information vidéo principale est traité de la même manière pour l'affichage sur un tube 16/9.

D'autre part, pour pouvoir insérer facilement l'information supplémentaire durant le temps nécessaire au balayage d'une ligne, à savoir conformément au standard, avant de réaliser le multiplexage, on normalise la partie ligne active des composantes du signal vidéo principal sur une durée inférieure à la durée théorique. De même, lorsque l'information vidéo supplémentaire est constituée par un signal vidéo supplémentaire issu d'un générateur d'inscrustation d'image de type classique, le signal vidéo supplémentaire est normalisé sur une durée de µs. De plus, les composantes du signal vidéo et du signal vidéo supplémentaire sont alignées sur le même niveau, à savoir sur le même niveau de noir.

En fait, pour permettre l'affichage du signal vidéo multiplexé sur un tube au format 16/9, il est nécessaire de traiter ledit signal en réalisant notamment une compression de l'image et éventuellement une multiplication de la fréquence de lecture de manière à lire successivement deux fois la même ligne. Ainsi, le traitement du signal multiplexé consiste à stocker chacune des composantes du signal multiplexé dans une mémoire-ligne à une première fréquence d'échantillonnage, fonction de la différence entre le format de l'image principal et le format d'affichage et à lire chacune des mémoires à une deuxième fréquence d'échantillonnage. En fonction du standard actuel, la première fréquence d'échantillonnage ou fréquence d'écriture est égale à 10, 125MHz, tandis que la deuxième fréquence d'échantillonnage ou fréquence de lecture est égale à 27MHz dans le cas où l'on répète la ligne ou à 13,5MHz sans répétition de ligne.

D'autres caractéristiques et avantages de la présente invention apparaîtront à la lecture de la description faite ci-après d'un mode de réalisation d'un dispositif mettant en oeuvre le procédé ci-dessus, avec référence aux dessins ci-annexés dans lesquels :
- la figure 1 est un schéma synoptique simplifié d'un dispositif mettant en oeuvre le procédé de la présente invention ;
- la figure 2 est un diagramme des temps des principaux signaux utilisés dans le dispositif de figure 1, et
- la figure 3 est un schéma expliquant l'organisation d'une mémoire de ligne utilisée dans le dispositif de la figure 1.

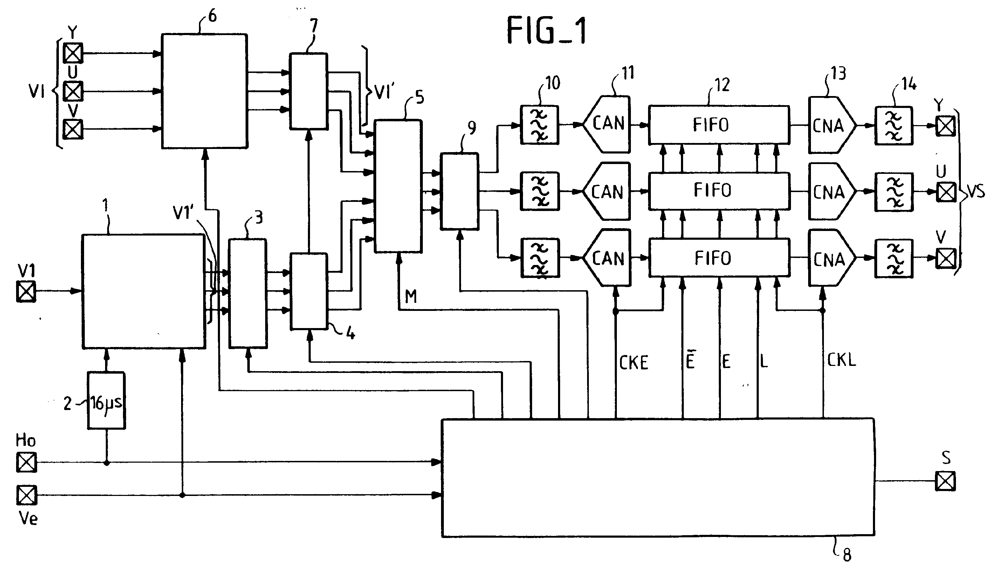

Comme représenté sur la figure 1, le dispositif pour la mise en oeuvre du procédé de la présente invention est constitué tout d'abord d'un générateur d'image réduite 1. Ce générateur d'image réduite est réalisé par un circuit connu de l'homme de l'art et utilisé pour réduire un signal vidéo secondaire dans les dispositifs d'incrustation d'image de type connu. Un tel générateur d'image réduite est organisé autour du circuit PIP 2250 produit par ITT, par exemple. Ce générateur 1 reçoit en entrée le signal vidéo supplémentaire V1 qui peut être, par exemple, le signal vidéo d'une autre chaîne de télévision ou le signal vidéo issu d'un magnétoscope. Il reçoit aussi comme signaux de synchronisation, les signaux de synchronisation horizontale HO et verticale VE du signal vidéo principal.

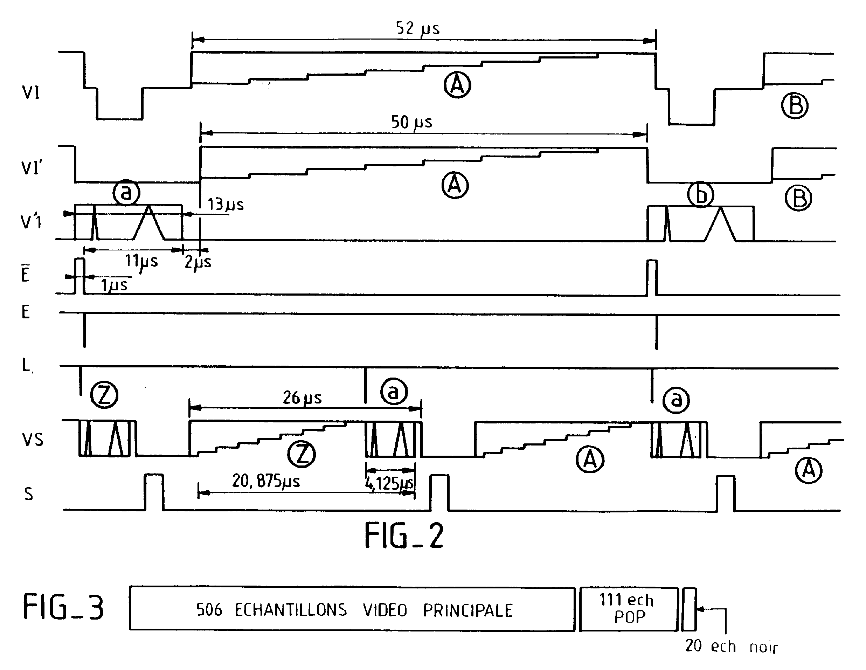

Comme représenté sur la figure 1, le signal de synchronisation horizontale HO est retardé par l'intermédiaire du circuit à retard 2. Pour obtenir le signal vidéo supplémentaire pendant le retour-ligne du signal vidéo principal, le retard appliqué sur le signal de synchronisation horizontale HO est d'environ 16 µs. De manière classique, le générateur 1 réalise une compression selon un rapport 4 du signal vidéo secondaire. Le générateur 1 traite les images au standard classique, à savoir 15,625/15, 750kHz et restitue une image réduite sous ce même standard. On obtiend donc, en sortie du générateur 1, un signal vidéo secondaire V′1 d'une durée de 13µs, comme représenté sur la figure 2. Ce signal V′1 est obtenu pendant les temps successifs référencés ⓐ , ⓑ , sur la figure 2.

Comme représenté sur la figure 1, les composantes Y, U, V du signal vidéo supplémentaire modulé V′1 sont envoyées sur un circuit d'effacement 3 qui réalise le centrage et la normalisation du signal vidéo supplémentaire de manière à ne prendre en compte que la partie centrée sur 11 µs. Ce circuit est commandé par un signal issu de la base de temps 8 décrite ci-après. Ce signal est un signal de commande actif durant 11 µs qui aligne la vidéo supplémentaire au niveau du noir le reste du temps. Les composantes en sortie du circuit 3 sont envoyées sur un circuit de "clamping" 4 de manière R aligner lesdites composantes sur un même niveau de noir. Le circuit 4 est commandé par un signal issu de la base de temps 8 et constitué par une impulsion de 3 µs situé en dehors des 13 µs utiles de la vidéo supplémentaire. Les composantes en sortie du circuit 4 sont envoyées sur un multiplexeur 5. D'autre part, les composantes Y, U, V du signal vidéo principal modulé VI sont elles aussi envoyées sur un circuit d'effacement 6. En effet, selon le standard actuel, la durée ligne du signal vidéo composite est de 64 µs. Toutefois, la partie ligne active a une durée de 52 µs comme représenté sur la figure 2, 12 µs étant destinés au retour ligne. Le circuit d'effacement 6 a pour but de normaliser la partie ligne active référencée Ⓐ ou Ⓑ en la centrant sur une durée inférieure. Cette durée est égale à 50 µs. Ce circuit est commandé par un signal de commande issu de la base de temps 8 qui est actif pendant 50 µs et qui aligne le signal vidéo principal au niveau du noir pendant les 14 µs restantes. Dans ce cas, on élimine, de chaque côté, 1 µs d'information vidéo. En fait, ceci n'est pas gênant au niveau de la qualité de l'image affichée, car en général les informations vidéo contenues aux extrémités du signal vidéo ne sont pas visibles au niveau de l'écran ou contiennent un certain nombre de perturbations gênantes qu'il est préférable d'éliminer. De même, les composantes issues du circuit 6 sont envoyées sur un circuit de "clamping" 7 pour réaliser un alignement desdites composantes sur un même niveau de noir. Ce circuit reçoit, de la base de temps 8, une impulsion de 4 µs située durant le retour ligne de la vidéo principale. On obtient, en sortie du circuit 7, un signal vidéo tel que représenté par VI′ sur la figure 2. Ce signal vidéo est envoyé en entrée du multiplexeur 5. Le multiplexeur 5 est commandé par le signal M issu d'une base de temps 8 qui sera décrite de manière plus détaillée ci-après. Le signal de commande M envoyé sur le multiplexeur autorise à l'état haut le passage du signal vidéo supplémentaire issu du circuit 4 vers le traitement numérique. On obtient donc en sortie du multiplexeur les composantes d'un signal vidéo composite constitué respectivement par la partie ligne active du signal vidéo principal pendant une durée de 50 µs et par les composantes du signal vidéo supplémentaires pendant 11 µs. Les composantes du signal vidéo issues du multiplexeur 5 sont alignées sur un même niveau de noir par l'intermédiaire d'un circuit de "clamping" 9. Ce circuit reçoit, de la base de temps 8, une impulsion de 2 µs située dans les 2 µs de noir écrit après la vidéo supplémentaire. Ensuite, les trois composantes Y, U, V issues du circuit 9 sont traitées dans un circuit numérique, dans le mode de réalisation représenté, de manière à sortir un signal vidéo pouvant être affiché sur un tube au format 16/9 sans distorsion.

Comme représenté sur la figure 1, le circuit de traitement est constitué essentiellement de trois circuits en parallèle comprenant chacun un circuit de filtrage 10, un convertisseur analogique-numérique 11, une cellule de type FIFO 12 constituée par des compteurs d'écriture et de lecture et une mémoire dynamique, un convertisseur numérique-analogique 13 et un circuit de filtrage 14. Les différents circuits, tels que les convertisseurs analogiques-numériques 11, les cellules 12 et les convertisseurs numériques-analogiques 13, sont commandés par des signaux d'horloge issus de la base de temps 8, notamment l'horloge d'écriture CKE et l'horloge de lecture CKL. Cette base de temps est réalisée par une rangée de porte ("Gate Array" en langue anglaise) qui reçoit les signaux de synchronisation HO et VE et fournit outre les signaux mentionnés ci-dessus, un signal de synchronisation à 32 kHz. D'autre part, les cellules de type FIFO 12 constituées principalement par des mémoires de ligne dynamiques avec des compteurs reçoivent un certain nombre de signaux issus de la base de temps 8 de manière à réaliser correctement l'écriture puis la lecture des mémoires. Dans un mode de réalisation pratique, les cellules 12 sont constituées par des circuits référencés NEC µ PD 41101. Ces signaux sont constitués principalement par un signal E̅ d'inhibition des FIFO en écriture. Ce signal E̅ est constitué par une impulsion de 1 µs comme représenté sur la figure 2. Cette impulsion est envoyée entre le signal vidéo principal Ⓐ et le signal vidéo supplémentaire représenté par ⓑ. Les FIFO reçoivent aussi une impulsion E d'initialisation d'écriture qui est émise avant la partie utile du signal vidéo supplémentaire ⓐ . De même, les FIFO reçoivent aussi une impulsion d'initialisation de lecture L qui est émise toutes les 32 µs. Cette impulsion d'initialisation de lecture L réinitialise le compteur de lecture pendant l'impulsion 1 µs ménagée entre l'écriture de l'image principale et celle de l'image réduite, comme représenté sur la figure 2 et comme expliqué de manière plus détaillée ci-après. Le circuit de traitement ci-dessus fonctionne de la manière suivante. Un compteur d'écriture contenu dans les FIFO est réinitialisé avant l'écriture de la première donnée des 11 µs du signal vidéo supplémentaire. Puis le niveau de noir de l'image principale est écrit durant 2 µs. Ensuite, la mémoire est écrite avec le signal vidéo principal pendant 50 µs puis une impulsion de 1 µs commandée par le signal E̅, inhibe l'écriture afin d'assurer une résynchronisation parfaite des opérations de lecture et d'écriture. La réinitialisation du compteur d'écriture est réalisée par le signal E̅. La mémorisation du niveau de noir permet de conserver une dynamique maximale au convertisseur analogique-numérique. La fréquence d'échantillonnage d'écriture est de 10,125 MHz. Cette fréquence d'écriture a été choisie, afin de réaliser une compression sur l'image incidente de manière à obtenir un affichage au format 16/9. Dans le mode de réalisation représenté, les mémoires de ligne sont ensuite lues a une fréquence de 27MHz. Les composantes du signal vidéo sont reconverties par les convertisseurs numériques-analogiques 13 et sont filtrées en sortie par les circuits de filtrages 14. On obtient donc un signal d'information vidéo en sortie VS tel que représenté sur la figure 2. La différence entre les fréquences d'écriture et de lecture assure donc une compression de l'image dans le sens horizontal de 1/4 et supprime ainsi tout anamorphose lors de l'affichage d'une image 4/3 sur un tube 16/9. La fréquence de lecture étant supérieure a celle d'écriture, afin d'éviter tout dépassement du compteur d'écriture par celui de lecture, certaines précautions doivent être prises. En particulier, le compteur d'écriture est initialisé pendant l'impulsion d'inhibition d'écriture 1µs ménagé entre l'écriture du signal vidéo principale et du signal vidéo supplémentaire. Ceci permet un contrôle direct des cellules FIFO. Il en résulte cependant que, lors de la lecture, le contenu du signal vidéo supplémentaire se trouve avancé d'une ligne.

Comme représenté sur la figure 2, le signal vidéo utile a donc une durée de 26 µs et est constitué par un signal vidéo principal de 20,875 µs et un signal vidéo supplémentaire de 4,125 µs, le supplément étant formé par un signal de niveau du noir. Lors de la lecture, ces signaux sont lus deux fois comme représenté par les références ⓐ Ⓐ ⓐ Ⓐ .

On expliquera maintenant la constitution des cellules FIFO avec référence à la figure 3 Comme mentionné ci-dessus, les cellules FIFO sont constituées par des mémoires de ligne dynamiques associées avec des compteurs spécifiques pour l'écriture et la lecture. Les mémoires ont une capacité de 910 échantillons. Toutefois, 637 échantillons sont écrits à chaque ligne. Les 273 derniers échantillons ont été écrits durant le retour trame. En fait, les cellules FIFO ne sont pas réinitialisées pendant la seconde ligne de chaque trame pour permettre de remplir complètement la mémoire. En lecture, on ne lit que 864 échantillons. Ils se décomposent, comme représenté sur la figure 3, en 506 échantillons pour l'image vidéo principale, 111 échantillons pour le signal vidéo supplémentaire ou POP, et 20 échantillons pour le niveau du noir. Les 227 échantillons restant proviennent du niveau de noir écrit en début de trame et non-réécrit à chaque fois.

Dans le présent cas, on a décrit l'utilisation du procédé sur des téléviseurs à 32 KHz avec répétition de ligne. Toutefois, il est évident pour l'homme de l'art que le procédé de la présente invention peut aussi être utilisé avec des téléviseurs à 15kHz sans répétition de ligne. D'autre part, le procédé de la présente invention a été mis en oeuvre avec un circuit numérique. Il est évident pour l'homme de l'art que le traitement de changement du format de l'image peut aussi être réalisé en utilisant un circuit analogique tel que des mémoires de ligne CCD (pour Charge Coupled Device en langue anglaise).

## Revendications

1. Procédé d'insertion d'une information vidéo supplémentaire a l'extérieur d'une image principale au format 4/3 sur un tube au format 16/9, caractérisé en ce qu'il consiste, avant de traiter pour affichage l'image principale, à insérer l'information supplémentaire dans le retour ligne de l'image principale.

2. Procédé selon la revendication 1, caractérisé en ce qu'il comporte les étapes suivantes :
- traitement (1) de l'information vidéo supplémentaire (V1) pour obtenir, au moment du retour ligne de l'image principale (VI), un signal vidéo au format souhaité ;
- multiplexage (5) des composantes du signal vidéo principal avec les composantes du signal vidéo supplémentaire, et
- traitement séparé des composantes (10, 11, 12, 13, 14) du signal multiplexé pour obtenir les composantes (Y, U, V) d'un signal d'affichage (VS) pour un affichage sur un tube au format 16/9.

3. Procédé selon la revendication 2, caractérisé en ce qu'avant de réaliser le multiplexage, on normalise (6) la partie ligne active des composantes du signal vidéo principal sur une durée inférieure à la durée théorique puis on met à niveau (7) le signal, et simultanément, on normalise (3) et on met à niveau (4) les composantes du signal vidéo supplémentaire.

4. Procédé selon la revendication 3, caractérisé en ce que la partie ligne active du signal vidéo principal est normalisée sur une durée de 50 µs.

5. Procédé selon la revendication 3, caractérisé en ce que le signal vidéo supplémentaire est normalisée sur une durée de 11µs.

6. Procédé selon la revendication 2, caractérisé en ce que le traitement du signal multiplexé consiste à stocker chacune des composantes du signal multiplexé dans une mémoire-ligne à une première fréquence d'échantillonnage fonction de la différence entre le format de l'image principale et le format d'affichage et à lire chacune des mémoires à une deuxième fréquence d'échantillonnage.

7. Procédé selon la revendication 6, caractérisé en ce que la première fréquence d'échantillonnage est égale à 10,125 MHz.

8. Procédé selon la revendication 6, caractérisé en ce que la deuxième fréquence d'échantillonnage est égale a 27MHz dans le cas où l'on répète la ligne ou à 13,5MHz.

## Patentansprüche

1. Verfahren zum Einblenden einer zusätzlichen Videoinformation außerhalb eines Hauptbildes mit 4/3-Format auf einer Röhre mit 16/9-Format, dadurch gekennzeichnet, daß es darin besteht, daß vor der Verarbeitung zur Anzeige des Hauptbildes die zusätzliche Information in den Zeilenrücksprung des Hauptbildes eingeblendet wird.

2. Verfahren gemäß Anspruch 1, dadurch gekennzeichnet, daß es die folgenden Schritte enthält:
- Verarbeitung (1) der zusätzlichen Videoinformation (V1), um im Zeitpunkt des Zeilenrücksprungs des Hauptbildes (VI) ein Videosignal mit gewünschtem Format zu erhalten;
- Multiplexieren (5) der Komponenten des Hauptvideosignals mit den Komponenten des zusätzlichen Videosignals und
- getrenntes Verarbeiten der Komponenten (10, 11, 12, 13, 14) des multiplexierten Signals, um die Komponenten (Y, U, V) eines Anzeigesignals (VS) für eine Anzeige auf der Röhre mit 16/9-Format zu erhalten.

3. Verfahren gemäß Anspruch 2, dadurch gekennzeichnet, daß vor der Ausführung der Multiplexierung der wirksame Zeilenanteil der Komponenten des Hauptvideosignals auf eine Dauer normiert (6) wird, die kleiner als die theoretische Dauer ist, und dann das Signal seinen Pegel (7) erhält, wobei gleichzeitig die Komponenten des zusätzlichen Videosignals normiert (3) werden und ihren Pegel (4) erhalten.

4. Verfahren gemäß Anspruch 3, dadurch gekennzeichnet, daß der wirksame Zeilenanteil des Hauptvideosignals auf eine Dauer von 50 µs normiert wird.

5. Verfahren gemäß Anspruch 3, dadurch gekennzeichnet, daß das zusätzliche Videosignal auf eine Dauer von 11 µs normiert wird.

6. Verfahren gemäß Anspruch 2, dadurch gekennzeichnet, daß die Verarbeitung des multiplexierten Signals darin besteht, daß jede der Komponenten des multiplexierten Signals in einem Zeilenspeicher mit einer ersten Abtastfrequenz gespeichert wird, welche von der Differenz zwischen dem Format des Hauptbildes und dem Anzeigeformat abhängt, und daß jeder der Speicher mit einer zweiten Abtastfrequenz gelesen wird.

7. Verfahren gemäß Anspruch 6, dadurch gekennzeichnet, daß die erste Abtastfrequenz gleich 10,125 MHz ist.

8. Verfahren gemäß Anspruch 6, dadurch gekennzeichnet, daß die zweite Abtastfrequenz 27 MHz ist, wenn die Zeile wiederholt wird, oder aber 13,5 MHz ist.

## Claims

1. Method of inserting an additional item of video information outside a main image to the 4/3 format on a tube to the 16/9 format, characterised in that it consists, before processing the main image for display, in inserting the additional item of information into the line flyback of the main image.

2. Method according to Claim 1, characterised in that it includes the following steps:
- processing (1) of the additional item of video information (V1) in order to obtain, at the moment of the line flyback of the main image (VI), a video signal to the desired format;
- multiplexing (5) of the components of the main video signal with the components of the additional video signal, and
- separate processing of the components (10, 11, 12, 13, 14) of the multiplexed signal in order to obtain the components (Y, U, V) of a display signal (VS) for a display on a tube to the 16/9 format.

3. Method according to Claim 2, characterised in that, before carrying out the multiplexing, the active line part of the components of the main video signal is normalised (6) over a duration shorter than the theoretical duration, then the signal is level-shifted (7) and, simultaneously, the components of the additional video signal are normalised (3) and level-shifted (4).

4. Method according to Claim 3, characterised in that the active line part of the main video signal is normalised over a duration of 50 µs.

5. Method according to Claim 3, characterised in that the additional video signal is normalised over a duration of 11 µs.

6. Method according to Claim 2, characterised in that the processing of the multiplexed signal consists in storing each of the components of the multiplexed signal in a line memory at a first sampling frequency which is a function of the difference between the format of the main image and the display format and in reading each of the memories at a second sampling frequency.

7. Method according to Claim 6, characterised in that the first sampling frequency is equal to 10.125 MHz.

8. Method according to Claim 6, characterised in that the second sampling frequency is equal to 27 MHz in the case in which the line is repeated, or to 13.5 MHz.
